# EUROPÄISCHE PATENTANMELDUNG

(11) **EP 4 054 143 A1**
(43) Veröffentlichungstag der Anmeldung: **07.09.2022**
(21) Anmeldenummer: 21160205.7
(22) Anmeldetag: 02.03.2021
(51) Int. Cl.: H04L 29/06, H04L 29/08, H04L 12/40

(54) **AUTHENTIFIZIEREN EINES GERÄTES IN EINEM KOMMUNIKATIONSNETZ EINER AUTOMATISIERUNGSANLAGE**

(71) Anmelder: Siemens Aktiengesellschaft, 80333 München (DE)
(72) Erfinder: Görbing, Andrej, 10318 Berlin (DE); Hurrelmann, Jonas, 13347 Berlin (DE)

(57) **Zusammenfassung**

Die Erfindung betrifft ein Verfahren zum Authentifizieren eines Gerätes (30) in einem Kommunikationsnetz (31, 40), bei dem eine das Gerät (30) angebende Authentifizierungsinformation an einen Authentifizierungsserver (35a, 35b, 41) übertragen wird, der basierend auf der Authentifizierungsinformation das Gerät (30) als Teilnehmer in dem Kommunikationsnetz (31, 40) zulässt oder ablehnt.

Um eine Authentifizierung eines Gerätes auch in einem redundant ausgelegten Kommunikationsnetz durchführen zu können, wird vorgeschlagen, dass das Kommunikationsnetz (31, 40) zwei Teilnetze (32a, 32b) umfasst, wobei das Gerät (30) zur redundanten Datenübertragung mit beiden Teilnetzen (32a, 32b) verbunden ist. Das Gerät (30) sendet zum Start der Authentifizierung Authentifizierungsanfragen an in den ersten Teilnetzen (32a, 32b) angeordnete Zugangspunkte (34a, 34b). Die Zugangspunkte (34a, 34b) senden die jeweilige empfangene Authentifizierungsinformation an einen mit dem jeweiligen Teilnetz (32a, 32b) verbundenen Authentifizierungsserver (35a, 35b, 41), der anhand der jeweiligen empfangenen Authentifizierungsinformation jeweils eine Prüfung der Authentizität des Geräts (30) durchführt und als Ergebnis der Prüfung das Gerät (30) als Teilnehmer in dem jeweiligen Teilnetz (32a, 32b) zulässt oder ablehnt.

Die Erfindung betrifft auch ein kommunikationsfähiges Gerät (30) und ein Kommunikationsnetz (31, 40) mit einem solchen Gerät (30).

## Beschreibung

Die Erfindung betrifft ein Verfahren zum Authentifizieren eines Gerätes in einem Kommunikationsnetz einer Automatisierungsanlage, bei dem eine das Gerät angebende Authentifizierungsinformation an einen Authentifizierungsserver übertragen wird und der Authentifizierungsserver basierend auf der Authentifizierungsinformation das Gerät als Teilnehmer in dem Kommunikationsnetz zulässt oder ablehnt.

Die Erfindung betrifft auch einerseits ein kommunikationsfähiges Gerät zum Anschluss an ein Kommunikationsnetz einer Automatisierungsanlage sowie andererseits ein Kommunikationsnetz mit einem solchen Gerät.

Kommunikationsfähige Geräte, also Geräte, die an ein Kommunikationsnetz angeschlossen werden können und über dieses mit anderen Geräten Daten durch Übertragung entsprechender Datentelegramme austauschen, werden heutzutage in vielen Bereichen der Technik, z.B. bei der Automatisierung von Anlagen, eingesetzt. Ein Beispiel für den Einsatz solcher Geräte in einem Kommunikationsnetz ist eine Automatisierungsanlage, in der netzwerkfähige Automatisierungsgeräte (im Folgenden auch schlicht als "Geräte" bezeichnet) über das Kommunikationsnetz miteinander zum Austausch von Datentelegrammen verbunden sind. Automatisierungsanlagen dienen zur Automatisierung von Systemen, z.B. elektrischen Energieversorgungsnetzen oder elektrischen Schaltanlagen, und umfassen üblicherweise Automatisierungsgeräte (z.B. sogenannte Feldgeräte), die in der Nähe von Primärkomponenten der entsprechenden Anlage, also z.B. des elektrischen Energieversorgungsnetzes, angeordnet sind. Solche Primärkomponenten können im Falle eines elektrischen Energieversorgungsnetzes beispielsweise elektrische Kabel und Leitungen, Transformatoren, Generatoren, Motoren oder Umrichter sein. Bei den Geräten kann es sich beispielsweise um sogenannte elektrische Schutzgeräte oder Feldleitgeräte handeln, die in Unterstationen elektrischer Energieversorgungsnetze installiert sind. In der Fachsprache werden solche Geräte oft auch als sogenannte "IEDS" ("Intelligent Electronic Devices") bezeichnet. Die Geräte sind hierbei mit dem Kommunikationsnetz verbunden und tauschen darüber Datentelegramme aus, die als Nutzdaten beispielsweise Steuerbefehle, Meldungen über Ereignisse (z. B. Schwellenwertverletzungen), Messwerte oder Statusmeldungen umfassen.

Häufig stellen Automatisierungsanlagen sicherheitskritische Systeme dar, die gegen unbefugte Eingriffe und Manipulationen zu schützen sind. Daher dürfen in den Kommunikationsnetzen solcher Automatisierungsanlagen üblicherweise nur solche Geräte miteinander Daten austauschen, die zuvor eine Registrierung durchlaufen haben, bei der einerseits ihre Identität festgestellt wird und andererseits ihre Befugnis, in dem Kommunikationsnetz Daten auszutauschen von einer übergeordneten Stelle festgestellt wird. Dieser Vorgang wird auch als "Authentifizierung" bezeichnet.

Es sind verschiedene Verfahren bekannt, wie eine Authentifizierung eines Gerätes in einem Kommunikationsnetz erfolgen kann. So definiert der Standard IEEE 802.1X ein Authentifizierungsprotokoll, mit dem sichergestellt werden kann, dass nur autorisierte Geräte auf ein Kommunikationsnetz (z.B. auf ein LAN) über freigeschaltete Kommunikationsports ("access ports") von Zugangspunkten, wie z.B. Ethernet Bridges, zugreifen können. Diese portbasierte Authentifizierung nach IEEE 802.1X wird häufig in Kommunikationsnetzen der Informationstechnologie (IT) eingesetzt. Auch im Rahmen der Betriebstechnologie ("operation technology" - OT) findet ein Einsatz statt, das Verfahren stößt hier aber aufgrund spezifischer Besonderheiten bisweilen an seine Grenzen, wie später im Detail erläutert wird.

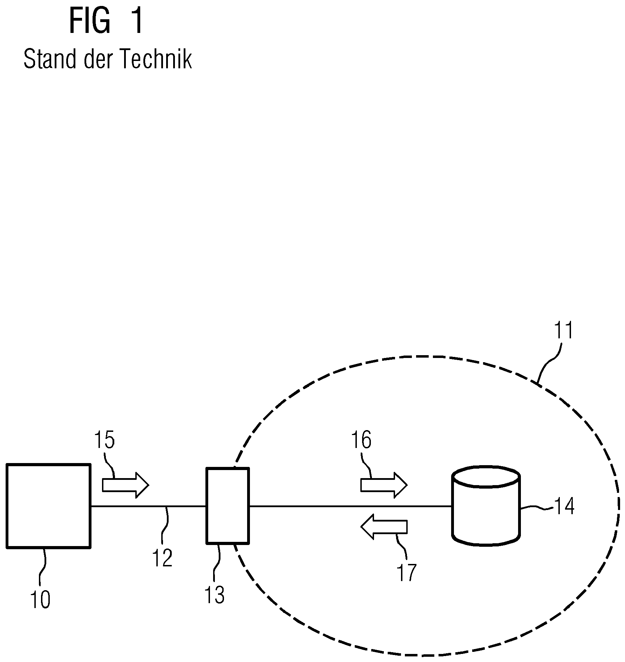

Figur 1 zeigt eine an die IEEE 802.1X-2020, Abschnitt 7.1, angelehnte Darstellung zur Erläuterung der Authentifizierung eines Gerätes 10 zum Datenaustausch in einem Kommunikationsnetz 11. Das Gerät 10 ("host") ist hierbei über eine Punkt-zu-Punkt Verbindung 12 mit einem Zugangspunkt 13 ("access point") des Kommunikationsnetzes 11 verbunden. Bei dem Gerät 10 kann es sich zum Beispiel um einen Personalcomputer, ein kommunikationsfähiges Endgerät oder ein Automatisierungsgerät einer Automatisierungsanlage handeln. Der Zugangspunkt 13 kann beispielsweise durch eine Ethernet Bridge gebildet sein. Nachdem das Gerät 10 mit dem Zugangspunkt 13 verbunden und eingeschaltet worden ist, sendet das Gerät in der Rolle des "Supplicants" eine seine Authentifizierungsinformation enthaltende Nachricht 15 an den Zugangspunkt 13. Dies kann mittels des sogenannten "Extensible Authentication Protocol over LAN" (EAPOL) erfolgen. Der Zugangspunkt 13 nimmt in diesem Fall die Rolle des "Authenticators" an und leitet die Authentifizierungsinformation mit einer weiteren Nachricht 16 an einen Authentifizierungsserver 14 weiter, bei dem es sich z.B. um einen "Remote Authentication Dial-In User Service" (RADIUS) Server handeln kann. Die Weiterleitung der Authentifizierungsinformation kann beispielsweise mit einer sogenannten "Extensible Authentication Protocol" (EAP) Nachricht erfolgen, die in Nachrichten eines AAA-Protokolls (Authentifizierung, Autorisierung und Accounting) eingebettet ist, beispielsweise des RADIUS-Protokolls.

Der Authentifizierungsserver 14 prüft die Validität der empfangenen Authentifizierungsinformation. Dies kann beispielsweise dadurch erfolgen, dass geprüft wird, ob die empfangene Authentifizierungsinformation mit einer Referenz-Authentifizierungsinformation übereinstimmt, die beispielsweise in einer dem Authentifizierungsserver zugeordneten Datenbank enthalten sein kann. Eine Alternative besteht darin, zu prüfen, ob ein mit der Authentifizierungsinformation verknüpftes Zertifikat vertrauenswürdig ist. In Abhängigkeit vom Ergebnis der Prüfung antwortet der Authentifizierungsserver mit einer entsprechenden Nachricht 17 an den Zugangspunkt 13, die den Zugangspunkt dazu veranlasst, das Gerät entweder zum Kommunikationsnetz zuzulassen (erfolgreiche Authentifizierung) oder abzulehnen (fehlgeschlagene Authentifizierung). Der Zugangspunkt öffnet nach erfolgreicher Authentifizierung seinen Zugangs-Port und das nunmehr authentifizierte Gerät beginnt den Datenaustausch mit anderen Geräten im Kommunikationsnetz.

Auf diese Weise kann sichergestellt werden, dass sich nur autorisierte Geräte mit dem Kommunikationsnetz verbinden dürfen und das Kommunikationsnetz somit gegen Manipulation durch Dritte und andere Sicherheitsangriffe, z.B. "eaves dropping", "spoofing" oder "denial-of-service" geschützt wird.

Neben der Absicherung gegen Angriffe erfordern viele automatisiert betriebene Anlagen auch eine hohe Ausfallsicherheit. Diese Anforderung besitzt starke Auswirkungen auf das Kommunikationsnetz, mit dem die Geräte einer solchen Anlage miteinander verbunden sind. Daher werden solche Kommunikationsnetze üblicherweise redundant ausgelegt, d.h., dass auch bei dem Ausfall einer Kommunikationsverbindung innerhalb des Kommunikationsnetzes die zuverlässige Übertragung von Datentelegrammen zwischen den einzelnen Geräten gewährleistet ist. Der Begriff "Kommunikationsverbindung" soll im Folgenden die komplette Übertragungsstrecke zwischen den jeweiligen Geräten umfassen, also sowohl ein vorhandenes (drahtgebundenes oder drahtloses) Übertragungsmedium als auch dessen physikalische, kommunikationstechnische und logische Anbindung zu dem jeweiligen Gerät (z.B. Schnittstellen, Kommunikationseinrichtungen, Protokollstacks) umfassen.

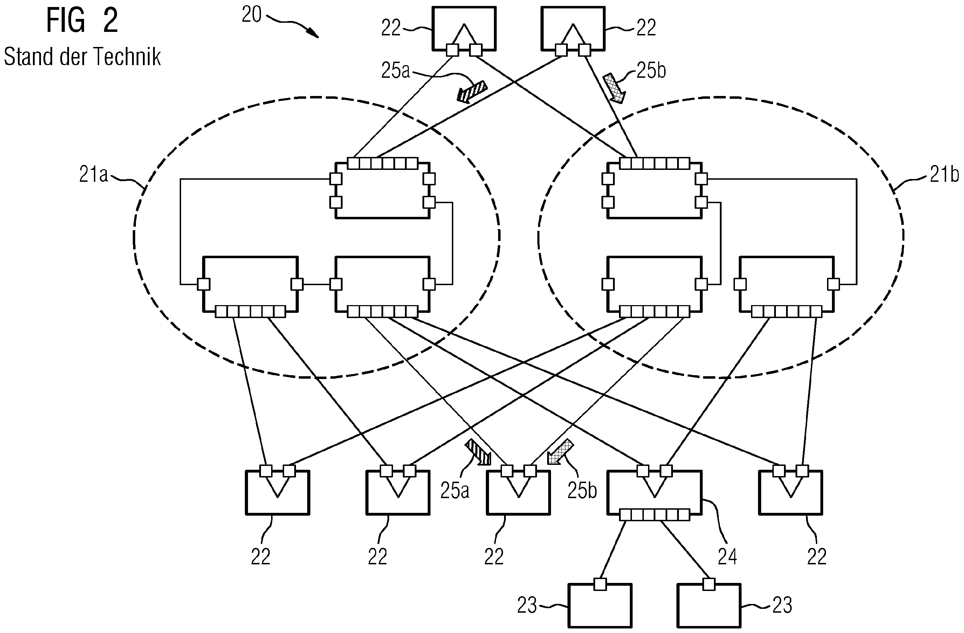

Eine Möglichkeit, ein Kommunikationsnetz ausfallsicher auszugestalten und dabei auch im Falle einer Störung einer Kommunikationsverbindung einen weitgehend nahtlosen Weiterbetrieb der Automatisierungsanlage zu gewährleisten, ist im Standard IEC 62439-3 als sogenanntes "Parallel Redundancy Protocol" (PRP) beschrieben. PRP-Kommunikationsnetze sind im Bereich der industriellen Kommunikation und in Unterstationen von Energieversorgungsnetzen weit verbreitet. Ein Beispiel eines gemäß PRP aufgebauten Kommunikationsnetzes 20 ist in Figur 2 gezeigt. Hierbei wird eine nahtlose Redundanz dadurch erreicht, dass das Kommunikationsnetz 20 zwei voneinander unabhängige Teilnetzwerke 21a und 21b beliebiger Topologie aufweist und jedes Gerät 22 als sogenannter "Double Attached Node PRP" (DANP) mit beiden Teilnetzwerken in Verbindung steht. Geräte mit nur einem Kommunikationsport ("Single Attached Node" - SAN) 23 können über eine Redundanzeinheit ("RedBox") 24 an das Kommunikationsnetz 20 gekoppelt werden. Beide Teilnetzwerke 21a, 21b arbeiten im Parallelbetrieb, wobei ein Gerät zum Versenden eines Datentelegramms dieses dupliziert und einerseits als erste Nachricht 25a an das erste Teilnetzwerk 21a und andererseits als zweite Nachricht 25b an das zweite Teilnetzwerk 21b sendet. Um als redundante PRP-Nachricht identifiziert werden zu können, werden den beiden Nachrichten 25a, 25b spezielle Suffixe in Form des sogenannten "Redundancy Control Trailers" (RCT) angehängt. Das als Empfänger des Datentelegramms vorgesehene Gerät empfängt beide Datentelegramme (Nachrichten 25a und 25b) aus den Teilnetzwerken 21a, 21b, wobei es das zuerst bei ihm eintreffende Datentelegramm verwendet und das später eintreffende Datentelegramm als Duplikat verwirft. Duplikate können dabei an einer eindeutigen Sequenznummer im RCT erkannt werden. Da die beiden Datentelegramme hierbei zwei voneinander unabhängige Übertragungswege nutzen, ist auch bei Vorliegen einer Störung auf einem der Übertragungswege sichergestellt, dass über den anderen - üblicherweise noch intakten - Übertragungsweg die mit dem Datentelegramm übermittelte Nutzinformation an den Empfänger gelangt. Die Verwendung eines gemäß dem PRP-Standard aufgebauten Kommunikationsnetzes ist beispielsweise aus der Beschreibungseinleitung der Europäischen Patentanmeldung EP 2148473 A1 bekannt.

Die oben beschriebene Vorgehensweise zur Authentifizierung eines Gerätes ist jedoch nicht für redundante Kommunikationsnetze ausgelegt.

Der Fachmann stellt sich daher die Aufgabe, eine Authentifizierung eines Gerätes auch in einem redundant ausgelegten Kommunikationsnetz, insbesondere einem nach IEC 62439-3 PRP ausgelegten Kommunikationsnetz, durchführen zu können.

Zur Lösung dieser Aufgabe wird ein Verfahren der eingangs beschriebenen Art erfindungsgemäß dahingehend weitergebildet, dass das Kommunikationsnetz ein erstes Teilnetz und ein zweites Teilnetz umfasst, wobei das Gerät zur redundanten Datenübertragung über einen ersten Kommunikationsport mit dem ersten Teilnetz und über einen zweiten Kommunikationsport mit dem zweiten Teilnetz verbunden ist. Zum Start der Authentifizierung sendet das Gerät über den ersten Kommunikationsport eine erste die Authentifizierungsinformation enthaltende Authentifizierungsanfrage an einen in dem ersten Teilnetz angeordneten ersten Zugangspunkt und über den zweiten Kommunikationsport eine zweite die Authentifizierungsinformation enthaltende Authentifizierungsanfrage an einen in dem zweiten Teilnetz angeordneten zweiten Zugangspunkt. Als Authentifizierungsinformation kann beispielsweise eine Kombination aus Username und Passwort, eine Identifizierung des Gerätes, z.B. ein Secure Device Identifier (DevID), und/oder ein Gerätezertifikat verwendet werden. Der erste und der zweite Zugangspunkt senden die jeweilige empfangene Authentifizierungsinformation über das jeweilige Teilnetz an einen mit dem jeweiligen Teilnetz verbundenen Authentifizierungsserver, der anhand der jeweiligen empfangenen Authentifizierungsinformation jeweils eine Prüfung der Authentizität des Geräts durchführt und als Ergebnis der Prüfung das Gerät als Teilnehmer in dem jeweiligen Teilnetz des Kommunikationsnetzes zulässt oder ablehnt.

Erfindungsgemäß findet somit eine separate Authentifizierung desselben Gerätes in jedem der Teilnetze statt. Damit hat das erfindungsgemäße Verfahren den Vorteil, dass außer beim Gerät selbst keinerlei Änderungen des PRP-Kommunikationsnetzes vorgenommen werden müssen, um eine Authentifizierung durchführen zu können. Insbesondere müssen auch keine proprietären Änderungen bezüglich des PRP-Standards eingeführt werden, wodurch die Interoperabilität mit anderen Geräten erschwert werden würde.

Konkret kann vorgesehen sein, dass das Kommunikationsnetz zur redundanten Datenübertragung gemäß dem Standard IEC 62439-3 PRP ausgebildet ist. Damit ist bei dem erfindungsgemäßen Verfahren insbesondere eine volle Kompatibilität zu den Standards IEEE 802.1X und IEC 62439-3 PRP gegeben.

Gemäß einer weiteren vorteilhaften Ausführungsform des erfindungsgemäßen Verfahrens kann vorgesehen sein, dass zur Prüfung der Authentizität des Geräts die empfangene Authentifizierungsinformation mit einer Referenz-Authentifizierungsinformation verglichen und/oder ein in der Authentifizierungsinformation enthaltenes Zertifikat hinsichtlich seiner Vertrauenswürdigkeit geprüft wird und bei Übereinstimmung das Gerät in dem jeweiligen Teilnetz zugelassen wird.

Die Referenz-Authentifizierungsinformation kann hierbei beispielsweise bei einer Systemkonfiguration in einer Datenbank des Authentifizierungsservers hinterlegt worden sein. Hinsichtlich des Zertifikats kann beispielsweise geprüft werden, ob der Authentifizierungsserver diejenige Stelle, die das Zertifikat ausgestellt hat, als vertrauenswürdig ansieht.

Eine weitere vorteilhafte Ausführungsform des erfindungsgemäßen Verfahrens sieht vor, dass als Reaktion auf die Prüfung eine Authentifizierungsantwort an den jeweiligen Zugangspunkt des jeweiligen Teilnetzes gesendet wird, die angibt, ob der jeweilige Zugangspunkt das Gerät zur Kommunikation in dem jeweiligen Teilnetz zulassen darf oder nicht.

Gemäß einer weiteren vorteilhaften Ausführungsform des erfindungsgemäßen Verfahrens kann vorgesehen sein, dass mit jedem der Teilnetze ein jeweiliger Authentifizierungsserver angeordnet ist. In diesem Fall wird der Zugang des Gerätes zu jedem der beiden Teilnetze über einen separaten Authentifizierungsserver bestimmt. Beiden Authentifizierungsservern müssen dann die Informationen zur Prüfung der Authentifizierungsinformation des Gerätes vorliegen. Alternativ kann vorgesehen sein, dass ein einzelner Authentifizierungsserver mit beiden Teilnetzen verbunden ist. Diesem werden aus beiden Teilnetzen die Nachrichten mit der Authentifizierungsinformation zugeführt. Nach entsprechender Prüfung sendet der Authentifizierungsserver über jedes der Teilnetze eine entsprechende Nachricht an den jeweiligen Zugangspunkt zurück.

Eine weitere vorteilhafte Ausführungsform des erfindungsgemäßen Verfahrens sieht vor, dass das Gerät eine mit dem ersten Kommunikationsport über eine erste Portzugriffssteuereinheit verbundene erste Authentifizierungseinrichtung und eine mit dem zweiten Kommunikationsport über eine zweite Portzugriffssteuereinheit verbundene zweite Authentifizierungseinrichtung aufweist, wobei die jeweilige Authentifizierungseinrichtung die jeweilige Authentifizierungsanfrage erzeugt und über den jeweiligen Kommunikationsport aussendet.

Auf diese Weise kann mit einfachen Mitteln eine für jedes Teilnetz separate Authentifizierung angestoßen werden.

In diesem Zusammenhang kann zudem vorgesehen sein, dass die erste Portzugriffssteuereinheit und die zweite Portzugriffssteuereinheit mit einer Redundanzeinheit des Geräts verbunden sind und während der Authentifizierung des Geräts einen Datenaustausch des jeweiligen Kommunikationsports nur mit der jeweiligen Authentifizierungseinrichtung und nach erfolgreicher Authentifizierung des Geräts einen Datenaustausch des jeweiligen Kommunikationsports nur mit der Redundanzeinheit des Geräts ermöglichen.

Die jeweilige Portzugriffssteuereinheit sorgt folglich dafür, dass bis zur erfolgreich abgeschlossenen Authentifizierung des Geräts keine Datenkommunikation des Gerätes mit anderen Geräten im Kommunikationsnetz stattfinden kann. Nach erfolgreicher Authentifizierung werden hingegen die entsprechenden redundanten Datentelegramme mit dem Kommunikationsnetz ausgetauscht.

Hinsichtlich der Redundanzeinheit kann zudem vorgesehen sein, dass die Redundanzeinheit nach erfolgreicher Authentifizierung des Geräts von dem Gerät zu versendende Telegramme dupliziert und über beide Kommunikationsports versendet und von dem Gerät empfangene Telegramme daraufhin überprüft, ob ein identisches Telegramm bereits empfangen worden ist, und das empfangene Telegramm abhängig von der Prüfung an eine Applikationsebene des Geräts weiterleitet oder verwirft.

Damit führt die Redundanzeinheit nach erfolgreicher Authentifizierung des Gerätes die Funktionalität zum redundanten Datenaustausch durch.

Die oben genannte Aufgabe wird auch durch ein kommunikationsfähiges Gerät zum Anschluss an ein Kommunikationsnetz einer Automatisierungsanlage gelöst, wobei das Kommunikationsnetz ein erstes Teilnetz und ein zweites Teilnetz umfasst. Das Gerät weist zur redundanten Datenübertragung einen ersten Kommunikationsport zur Verbindung mit dem ersten Teilnetz und einen zweiten Kommunikationsport zur Verbindung mit dem zweiten Teilnetz auf.

Erfindungsgemäß ist vorgesehen, dass das Gerät eine mit dem ersten Kommunikationsport über eine erste Portzugriffssteuereinheit verbundene erste Authentifizierungseinrichtung aufweist, die dazu eingerichtet ist, zum Start einer Authentifizierung des Geräts eine erste eine Authentifizierungsinformation enthaltende Authentifizierungsanfrage zu erzeugen. Das Gerät weist zudem eine mit dem zweiten Kommunikationsport über eine zweite Portzugriffssteuereinheit verbundene zweite Authentifizierungseinrichtung auf, die dazu eingerichtet ist, zum Start einer Authentifizierung des Geräts eine zweite die Authentifizierungsinformation enthaltende Authentifizierungsanfrage zu erzeugen. Außerdem ist das Gerät dazu eingerichtet, über den ersten Kommunikationsport die erste Authentifizierungsanfrage auszusenden und über den zweiten Kommunikationsport die zweite Authentifizierungsanfrage auszusenden.

Hinsichtlich des erfindungsgemäßen Gerätes gelten alle zu dem erfindungsgemäßen Verfahren voranstehend und nachfolgend gemachten Ausführungen und umgekehrt in entsprechender Weise, insbesondere ist das erfindungsgemäße Gerät zur Durchführung des erfindungsgemäßen Verfahrens in jeder beliebigen Ausführungsform oder einer Kombination beliebiger Ausführungsformen eingerichtet. Auch hinsichtlich der Vorteile des erfindungsgemäßen Gerätes wird auf die zu dem erfindungsgemäßen Verfahren beschriebenen Vorteile verwiesen.

Eine vorteilhafte Ausführungsform des erfindungsgemäßen Gerätes sieht vor, dass die erste Portzugriffssteuereinheit und die zweite Portzugriffssteuereinheit mit einer Redundanzeinheit des Geräts verbunden und dazu eingerichtet sind, während der Authentifizierung des Geräts einen Datenaustausch des jeweiligen Kommunikationsports nur mit der jeweiligen Authentifizierungseinrichtung und nach erfolgreicher Authentifizierung des Geräts einen Datenaustausch des jeweiligen Kommunikationsports nur mit der Redundanzeinheit des Geräts zu ermöglichen.

Außerdem kann in diesem Zusammenhang vorgesehen sein, dass die Redundanzeinheit dazu eingerichtet ist, nach erfolgreicher Authentifizierung des Geräts von dem Gerät zu versendende Telegramme zu duplizieren und über beide Kommunikationsports zu versenden und von dem Gerät empfangene Telegramme daraufhin zu überprüfen, ob ein identisches Telegramm bereits empfangen worden ist, und das empfangene Telegramm abhängig von der Prüfung an eine Applikationsebene des Geräts weiterzuleiten oder zu verwerfen.

Schließlich wird die oben genannte Aufgabe auch gelöst durch ein Kommunikationsnetz einer Automatisierungsanlage mit einem ersten Teilnetz und einem zweiten Teilnetz, einem ersten Zugangspunkt in dem ersten Teilnetz, einem zweiten Zugangspunkt in dem zweiten Teilnetz, zumindest einem Authentifizierungsserver und zumindest einem zu authentifizierenden Gerät, wobei das Kommunikationsnetz dazu ausgebildet ist, zur Authentifizierung des zumindest einen Geräts ein Verfahren gemäß einem der Ansprüche 1 bis 9 durchzuführen. Hierzu wirken die Komponenten des Kommunikationsnetzes in entsprechender Weise zusammen.

Hinsichtlich des Kommunikationsnetzes kann zudem vorgesehen sein, dass das Gerät entsprechend einem der Ansprüche 10 bis 13 ausgebildet ist und über seinen ersten Kommunikationsport mit dem ersten Zugangspunkt und mit seinem zweiten Kommunikationsport mit dem zweiten Zugangspunkt in Verbindung steht.

Die Erfindung wird nachfolgend anhand eines Ausführungsbeispiels näher erläutert. Die spezifische Ausgestaltung des Ausführungsbeispiels ist für die allgemeine Ausgestaltung des erfindungsgemäßen Verfahrens und der erfindungsgemäßen Einrichtung in keiner Weise einschränkend zu verstehen; vielmehr können einzelne Ausgestaltungsmerkmale des Ausführungsbeispiels in beliebiger Weise frei untereinander und mit den voranstehend beschriebenen Merkmalen kombiniert werden.

Hierzu zeigen
- Figur 1: eine Darstellung eines zu authentifizierenden Gerätes in einem Kommunikationsnetz gemäß dem Stand der Technik;
- Figur 2: ein Beispiel eines gemäß IEC 62439-3 PRP redundant aufgebauten Kommunikationsnetzes gemäß dem Stand der Technik;
- Figur 3: eine erste beispielhafte Darstellung eines redundant an ein Kommunikationsnetz angeschlossenen zu authentifizierenden Gerätes;
- Figur 4: eine zweite beispielhafte Darstellung eines redundant an ein Kommunikationsnetz angeschlossenen zu authentifizierenden Gerätes; und
- Figur 5: eine schematische Darstellung des Aufbaus eines zu authentifizierenden Gerätes.

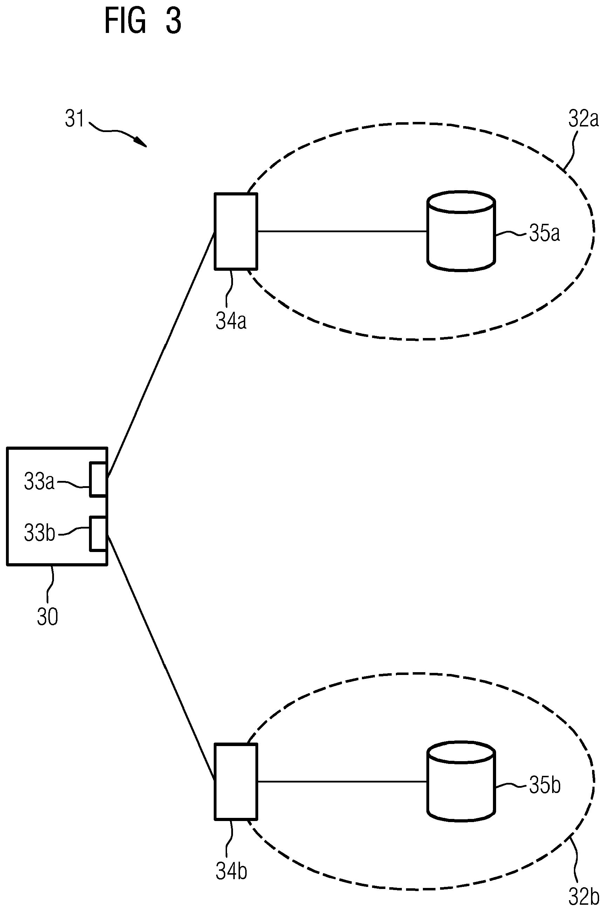

Gemäß Figur 3 soll ein kommunikationsfähiges Gerät 30 als Teilnehmer in einem Kommunikationsnetz 31 zugelassen werden und führt dazu eine Authentifizierungsprozedur durch. Das Kommunikationsnetz 31 ist zur redundanten Datenübertragung, z.B. entsprechend dem Standard IEC 62439-3 PRP, ausgebildet und umfasst hierfür zwei Teilnetze, nämlich ein erstes Teilnetz 32a (LAN A) und ein zweites Teilnetz 32b (LAN B). Zur Datenübertragung ist das Gerät 30 über einen ersten Kommunikationsport 33a mit einem ersten Zugangspunkt 34a des ersten Teilnetzes 32a und über einen zweiten Kommunikationsport 33b mit einem zweiten Zugangspunkt 34b des zweiten Teilnetzes 32b verbunden. Zwischen dem Gerät 30 und dem jeweiligen Zugangspunkt 34a, 34b bestehen Punkt-zu-Punkt Verbindungen. Im Sinne des Standards IEC 62439-3 PRP stellt das Gerät 30 einen Double Attached Node (DANP) dar.

Das Gerät 30 und das Kommunikationsnetz 31 können zum Beispiel zu einer Automatisierungsanlage eines technischen Systems (z.B. eines Energieversorgungsnetzes, einer Fertigungsanlage oder einer Prozessanlage) gehören. In diesem Fall kann das Gerät beispielsweise ein Automatisierungsgerät zum Regeln, Steuern, Überwachen und/oder Schützen des technischen Systems sein.

Zur Authentifizierung führt das Gerät 30 den Authentifizierungsvorgang separat für beide Teilnetze 32a, 32b durch. Im Sinne des Standards IEEE 802.1X nimmt das Gerät 30 hierfür die Rolle des "Supplicants" ein, während der jeweilige Zugangspunkt 34a, 34b die Rolle des "Authenticators" einnimmt.

Zum Start der Authentifizierung sendet das Gerät 30 über jeden seiner Kommunikationsports 33a, 33b eine jeweilige Authentifizierungsanfrage an den jeweiligen Zugangspunkt 34a, 34b. Die Authentifizierungsanfragen beinhalten eine Authentifizierungsinformation des Gerätes 30 und können beispielswiese gemäß dem EAPOL Protokoll ausgebildet sein. Die Zugangspunkte 34a, 34b leiten die Authentifizierungsinformation an einen mit dem jeweiligen Teilnetz 32a, 32b verbundenen Authentifizierungsserver weiter. In der Ausführungsform der Figur 3 sind hierfür zwei separate Authentifizierungsserver 35a, 35b vorgesehen, von denen jeweils einer mit dem Teilnetz 32a und dem Teilnetz 32b verbunden ist.

Die Authentifizierungsserver 35a, 35b empfangen die Authentifizierungsinformation aus dem jeweiligen Teilnetz 32a, 32b und prüfen damit, ob das Gerät 30 als Teilnehmer zu dem Kommunikationsnetz 31 zugelassen werden darf. Zu diesem Zweck haben die Authentifizierungsserver 35a, 35b beispielsweise Zugriff auf eine jeweilige für das Gerät 30 spezifische Referenz-Authentifizierungsinformation, mit der sie die empfangene Authentifizierungsinformation vergleichen. Alternativ oder zusätzlich kann auch die Vertrauenswürdigkeit eines in der Authentifizierungsinformation enthaltenen Zertifikats geprüft werden.

Damit wird die EAP-basierte Authentifizierung einerseits vom ersten Kommunikationsport 33a über den ersten Zugangspunkt 34a zum ersten Authentifizierungsserver 35a und andererseits vom zweiten Kommunikationsport 33b über den zweiten Zugangspunkt 34b zum zweiten Authentifizierungsserver 35b durchgeführt. Dabei wird die identische Authentifizierungsinformation über beide Teilnetze 32a, 32b an die Authentifizierungsserver 35a, 35b gesendet, die daraufhin identische Entscheidungen darüber treffen werden, ob das Gerät 30 als Teilnehmer zu dem Kommunikationsnetz 31 zugelassen werden darf.

Entsprechend der Entscheidung senden die Authentifizierungsserver 35a, 35b Authentifizierungsantworten an die Zugangspunkte 34a, 34b, die bei erfolgreicher Authentifizierung die mit den Kommunikationsports 33a, 33b verbundenen Ports für den Datenaustausch öffnen.

Da das Verfahren zur Authentifizierung unabhängig für jeden Kommunikationsport 33a, 33b durchgeführt wird, werden die Authentifizierungsanfragen (EAPOL Nachrichten) vor ihrem Versenden nicht dupliziert und es werden entsprechend auch keine Duplikate von auf die Authentifizierung bezogenen Nachrichten beim Empfang durch das Gerät 30 entfernt. Somit enthalten die auf die Authentifizierung bezogenen Nachrichten auch kein Suffix in Form des Redundancy Control Trailers.

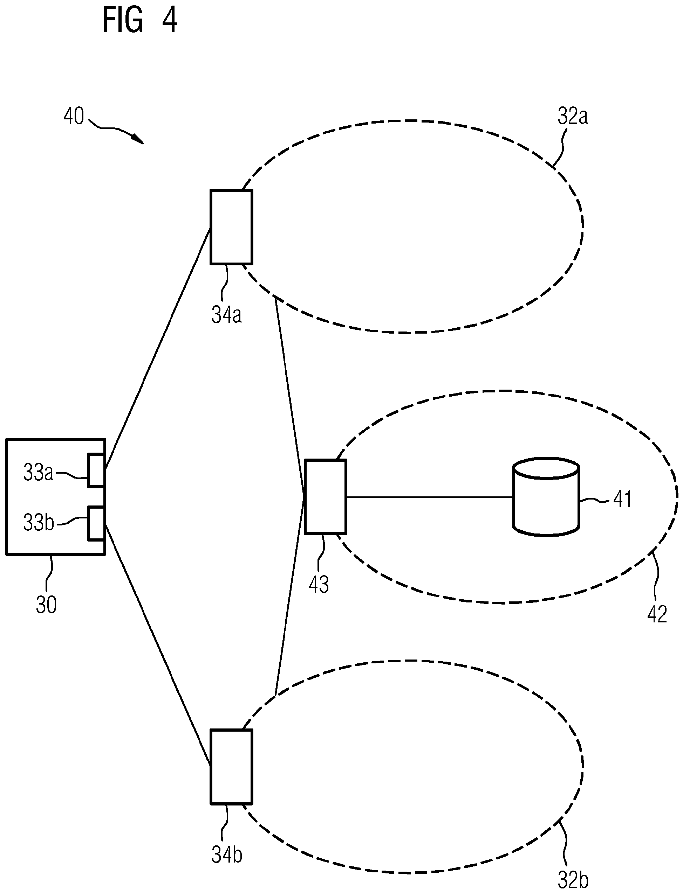

Alternativ zum Aufbau gemäß Figur 3 kann das Kommunikationsnetz auch mit einem einzelnen Authentifizierungsserver ausgestattet sein. Dies ist in Figur 4 dargestellt. Gleiche Bezugszeichen bezeichnen hierbei identische oder einander entsprechende Komponenten. Gemäß diesem Ausführungsbeispiel ist ein Kommunikationsnetz 40 mit einem einzelnen Authentifizierungsserver 41 ausgestattet, der sowohl mit dem ersten Teilnetz 32a als auch mit dem zweiten Teilnetz 32b verbunden ist.

Ein solcher Authentifizierungsserver 41 kann beispielsweise in einer Leitstelle der Automatisierungsanlage angeordnet und mit einem Netzwerk 42, z.B. einem LAN (local area network) oder WAN (wide area network), verbunden sein. Die Teilnetze 32a, 32b können mit dem Netzwerk 42 über einen Netzwerkzugangspunkt 43 (Edge Point), z.B. einen IP Router, verbunden sein.

Der Authentifizierungsprozess läuft weitgehend wie im Beispiel der Figur 3 ab. Im Unterschied dazu werden die Nachrichten mit den Authentifizierungsinformationen von den jeweiligen Zugangspunkten 34a, 34b aus jedem Teilnetz 32a, 32b über den Netzwerkzugangspunkt 43 an den gemeinsamen Authentifizierungsserver 42 übermittelt. Dieser empfängt somit zweimal die Identifizierungsinformation des Geräts 30, einmal aus dem ersten Teilnetz 32a und einmal aus dem zweiten Teilnetz 32b. Der Authentifizierungsserver 42 prüft die Authentifizierungsinformation wie oben beschrieben und sendet auf jede der Nachrichten eine entsprechende Authentifizierungsantwort an jedes der Teilnetze 32a, 32b. Da es sich um die identische Authentifizierungsinformation handelt, wird auch die Authentifizierungsantwort eine entsprechend identische Entscheidung enthalten und das Gerät 30 als Teilnehmer zum Kommunikationsnetz 40 zulassen oder ablehnen.

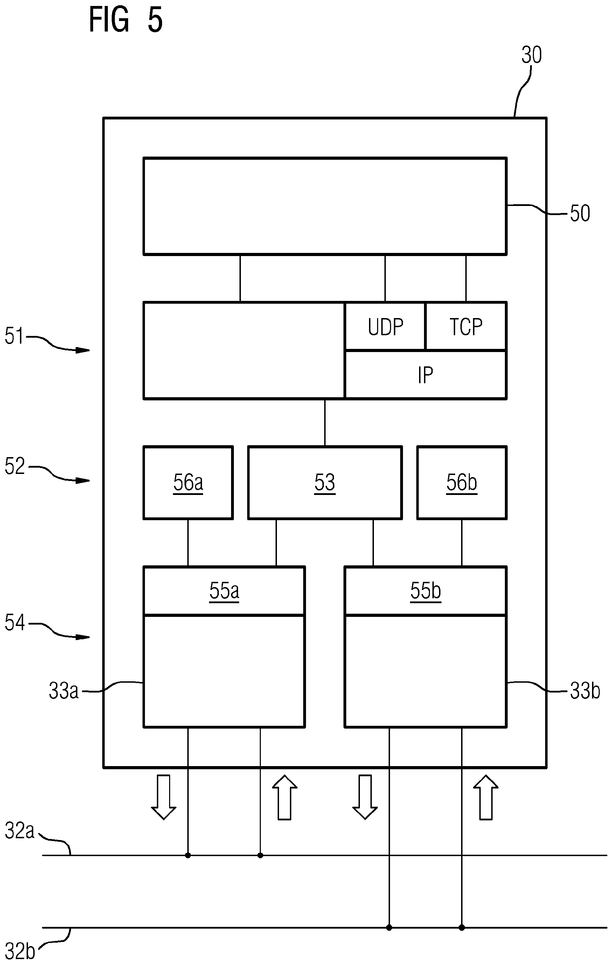

Figur 5 zeigt schließlich den schematischen Aufbau der Kommunikationsstruktur eines Gerätes 30. Das Gerät weist dementsprechend eine Applikationsebene 50 auf, auf der die eigentlichen Gerätefunktionen mittels einer beispielsweise auf einem Prozessor ablaufenden Gerätesoftware, einem integrierten Logikbaustein mit Hardwarecodierung (ASIC, FPGA) oder einer Kombination aus Gerätesoftware auf einem Prozessor und einem integrierten Logikbaustein ausgeführt werden. Zur externen Kommunikation greift die Applikationsebene 50 auf eine Transport-/Netzwerkebene 51 (Transport Layer, Network Layer) zu, die Protokollstacks für die Echtzeitkommunikation ("hard real-time Stack") sowie die Protokolle UDP, TCP und IP aufweist.

Diese Transport-/Netzwerkebene 51 steht mit einer Redundanzeinheit 53 (z.B. einer "Link Redundancy Entity" gemäß IEC 62439-3) einer Verbindungsebene 52 (Link Layer) in Verbindung, die wiederum auf einer physikalischen Ebene 54 (Physical Layer) mit dem ersten Kommunikationsport 33a und dem zweiten Kommunikationsport 33b des Gerätes 30 verbunden ist. Die Kommunikationsports 33a bzw. 33b stehen zum Datenaustausch mit den in Figur 5 jeweils nur angedeuteten Teilnetzen 32a bzw. 32b in Verbindung.

Funktional zwischen den Kommunikationsports 33a und 33b und der Redundanzeinheit 53 sind eine erste bzw. eine zweite Portzugriffssteuereinheit 55a bzw. 55b angeordnet. Die jeweilige Portzugriffssteuereinheit 55a bzw. 55b ist daneben jeweils mit einer Authentifizierungseinrichtung 56a bzw. 56b verbunden.

Die geräteseitige Authentifizierung wird wie nachfolgend beschrieben durchgeführt. Die beiden Instanzen der Portzugriffssteuereinheit 55a bzw. 55b dienen als protokollfreie Zwischenschicht ("protocol-less shim") und können im Sinne der IEEE 802.1X-2020 wahlweise z.B. als "Port Access Controller" PAC oder als "MAC Security Entity" (SecY) mit zusätzlicher Datenverschlüsselung implementiert werden.

Jede Portzugriffssteuereinheit 55a, 55b ist mit einem Kommunikationsport 33a, 33b, der Redundanzeinheit "Link Redundancy Entity" (LRE) und jeweils einer Instanz der Authentifizierungseinrichtungen 56a, 56b verbunden. Dabei stellen die Authentifizierungseinrichtungen 56a, 56b beispielsweise Authentifizierungsprotokoll-Maschinen gemäß der IEEE 802.1X-2020 dar.

Die Authentifizierungseinrichtungen 56a, 56b erzeugen zum Anstoßen der Authentifizierung des Geräts 30 die Authentifizierungsanfragen und übermitteln sie über die jeweilige Portzugriffssteuerung 55a, 55b zur Übertragung an die Teilnetze 32a, 32b an den jeweiligen Kommunikationsport 33a, 33b. Damit werden Nachrichten (z.B. EAPOL Nachrichten) im Zusammenhang mit der Authentifizierung immer zwischen der jeweiligen Authentifizierungseinrichtung 56a, 56b und dem jeweiligen Kommunikationsport 33a, 33b ausgetauscht.

Erst nach der erfolgreichen Authentifizierung des Gerätes 30 sorgen die Portzugriffsteuereinheiten 55a, 55b dafür, dass der Datenaustausch stattdessen zwischen der Redundanzeinheit 53 und den Kommunikationsports 33a, 33b erfolgt. Damit dienen die Portzugriffssteuereinheiten 55a, 55b als statusabhängige Umschalter der Kommunikation zwischen dem jeweiligen Kommunikationsport einerseits und der Authentifizierungseinrichtung 56a, 56b bzw. der Redundanzeinheit 53 andererseits. Der Status der Portzugriffssteuereinheiten 55a, 55b hängt dabei davon ab, ob das Gerät 30 authentifiziert worden ist oder nicht.

Im Ergebnis wird die Authentifizierung ohne Mitwirkung der Redundanzeinheit 53 unabhängig einerseits von der ersten Authentifizierungseinrichtung 56a hinsichtlich des ersten Teilnetzes 32a und andererseits von der zweiten Authentifizierungseinrichtung 56b hinsichtlich des zweiten Teilnetzes 32b durchgeführt. Die mit der Authentifizierung in Verbinndung stehenden Nachrichten enthalten entsprechend kein PRP-Suffix (Redundancy control Trailer - RCT). Erst nach der Authentifizierung wird die Redundanzeinheit 53 in die Kommunikation eingebunden, so dass im Betrieb verschickte redundante Nachrichten den RCT erhalten.

Neben dem in Figur 5 beschriebenen funktionellen Aufbau des Gerätes 30 werden keine Änderungen oder Erweiterungen hinsichtlich der einzelnen Komponenten des Kommunikationsnetzes nötig, so dass die beschriebene Lösung voll kompatibel mit den Standards IEEE 802.1X and IEC 62439-3 PRP ist.

Zusammengefasst stellt die Erfindung eine Lösung zur Verfügung, wie eine Authentifizierung eines Gerätes in einem redundant aufgebauten Kommunikationsnetz erfolgen kann. Insbesondere erfolgt die Authentifizierung portbasiert entsprechend dem Standard IEEE 802.1X in einem gemäß dem Standard IEC 62439-3 PRP ausgebildeten Kommunikationsnetz. Die beschriebene Lösung ist besonders vorteilhaft in industriellen Automatisierungsanlagen einsetzbar, beispielsweise bei der Automatisierung von Energieversorgungsnetzen. Hierdurch können Ausfallsicherheit auf der einen Seite und höchste Cybersicherheits-Anforderungen auf der anderen Seite wirksam miteinander verbunden werden.

Obwohl die Erfindung vorstehend im Detail durch bevorzugte Ausführungsbeispiele näher illustriert und beschrieben worden ist, ist die Erfindung nicht durch die offenbarten Beispiele eingeschränkt und andere Variationen können vom Fachmann hieraus abgeleitet werden, ohne den Schutzumfang der nachfolgenden Patentansprüche zu verlassen.

## Patentansprüche

1. Verfahren zum Authentifizieren eines Gerätes (30) in einem Kommunikationsnetz (31, 40) einer Automatisierungsanlage, bei dem
- eine das Gerät (30) angebende Authentifizierungsinformation an einen Authentifizierungsserver (35a, 35b, 41) übertragen wird und der Authentifizierungsserver (35a, 35b, 41) basierend auf der Authentifizierungsinformation das Gerät (30) als Teilnehmer in dem Kommunikationsnetz (31, 40) zulässt oder ablehnt;
**dadurch gekennzeichnet, dass**
- das Kommunikationsnetz (31, 40) ein erstes Teilnetz (32a) und ein zweites Teilnetz (32b) umfasst, wobei das Gerät (30) zur redundanten Datenübertragung über einen ersten Kommunikationsport (33a) mit dem ersten Teilnetz (32a) und über einen zweiten Kommunikationsport (33b) mit dem zweiten Teilnetz (32b) verbunden ist;
- das Gerät (30) zum Start der Authentifizierung über den ersten Kommunikationsport (33a) eine erste die Authentifizierungsinformation enthaltende Authentifizierungsanfrage an einen in dem ersten Teilnetz (32a) angeordneten ersten Zugangspunkt (34a) sendet und über den zweiten Kommunikationsport (33b) eine zweite die Authentifizierungsinformation enthaltende Authentifizierungsanfrage an einen in dem zweiten Teilnetz (32b) angeordneten zweiten Zugangspunkt (34b) sendet;
- der erste und der zweite Zugangspunkt (34a, 34b) die jeweilige empfangene Authentifizierungsinformation über das jeweilige Teilnetz (32a, 32b) an einen mit dem jeweiligen Teilnetz (32a, 32b) verbundenen Authentifizierungsserver (35a, 35b, 41) senden;
- der mit dem jeweiligen Teilnetz (32a, 32b) verbundene Authentifizierungsserver (35a, 35b, 41) anhand der jeweiligen empfangenen Authentifizierungsinformation jeweils eine Prüfung der Authentizität des Geräts (30) durchführt und als Ergebnis der Prüfung das Gerät (30) als Teilnehmer in dem jeweiligen Teilnetz (32a, 32b) des Kommunikationsnetzes (30, 41) zulässt oder ablehnt.

2. Verfahren nach Anspruch 1,
**dadurch gekennzeichnet, dass**
- das Kommunikationsnetz (31, 40) zur redundanten Datenübertragung gemäß dem Standard IEC 62439-3 PRP ausgebildet ist.

3. Verfahren nach Anspruch 1 oder 2,
**dadurch gekennzeichnet, dass**
- zur Prüfung der Authentizität des Geräts (30) die empfangene Authentifizierungsinformation mit einer Referenz-Authentifizierungsinformation verglichen wird und/oder ein in der Authentifizierungsinformation enthaltenes Zertifikat hinsichtlich seiner Vertrauenswürdigkeit geprüft wird; und
- bei Übereinstimmung das Gerät (30) in dem jeweiligen Teilnetz (32a, 32b) zugelassen wird.

4. Verfahren nach einem der vorangehenden Ansprüche,
**dadurch gekennzeichnet, dass**
- als Reaktion auf die Prüfung eine Authentifizierungsantwort an den jeweiligen Zugangspunkt (34a, 34b) des jeweiligen Teilnetzes (32a, 32b) gesendet wird, die angibt, ob der jeweilige Zugangspunkt (34a, 34b) das Gerät (30) zur Kommunikation in dem jeweiligen Teilnetz (32a, 32b) zulassen darf oder nicht.

5. Verfahren nach einem der Ansprüche 1 bis 4,
**dadurch gekennzeichnet, dass**
- mit jedem der Teilnetze (32a, 32b) ein jeweiliger Authentifizierungsserver (35a, 35b) angeordnet ist.

6. Verfahren nach einem der Ansprüche 1 bis 4,
**dadurch gekennzeichnet, dass**
- ein einzelner Authentifizierungsserver (41) mit beiden Teilnetzen (32a, 32b) verbunden ist.

7. Verfahren nach einem der vorangehenden Ansprüche,
**dadurch gekennzeichnet, dass**
- das Gerät (30) eine mit dem ersten Kommunikationsport (33a) über eine erste Portzugriffssteuereinheit (55a) verbundene erste Authentifizierungseinrichtung (56a) und eine mit dem zweiten Kommunikationsport (33b) über eine zweite Portzugriffssteuereinheit (55b) verbundene zweite Authentifizierungseinrichtung (56b) aufweist, wobei die jeweilige Authentifizierungseinrichtung (56a, 56b) die jeweilige Authentifizierungsanfrage erzeugt und über den jeweiligen Kommunikationsport (33a, 33b) aussendet.

8. Verfahren nach Anspruch 7,
**dadurch gekennzeichnet, dass**
- die erste Portzugriffssteuereinheit (55a) und die zweite Portzugriffssteuereinheit (55b) mit einer Redundanzeinheit (53) des Geräts (30) verbunden sind und während der Authentifizierung des Geräts (30) einen Datenaustausch des jeweiligen Kommunikationsports (33a, 33b) nur mit der jeweiligen Authentifizierungseinrichtung (56a, 56b) und nach erfolgreicher Authentifizierung des Geräts (30) einen Datenaustausch des jeweiligen Kommunikationsports (33a, 33b) nur mit der Redundanzeinheit (53) des Geräts (30) ermöglichen.

9. Verfahren nach Anspruch 8,
**dadurch gekennzeichnet, dass**
- die Redundanzeinheit (53) nach erfolgreicher Authentifizierung des Geräts (30) von dem Gerät (30) zu versendende Telegramme dupliziert und über beide Kommunikationsports (33a, 33b) versendet und von dem Gerät (30) empfangene Telegramme daraufhin überprüft, ob ein identisches Telegramm bereits empfangen worden ist, und das empfangene Telegramm abhängig von der Prüfung an eine Applikationsebene des Geräts (30) weiterleitet oder verwirft.

10. Kommunikationsfähiges Gerät (30) zum Anschluss an ein Kommunikationsnetz (31, 40) einer Automatisierungsanlage, wobei das Kommunikationsnetz (31, 40) ein erstes Teilnetz (32a) und ein zweites Teilnetz (32b) umfasst, wobei
- das Gerät (30) zur redundanten Datenübertragung einen ersten Kommunikationsport (33a) zur Verbindung mit dem ersten Teilnetz (32a) und einen zweiten Kommunikationsport (33b) zur Verbindung mit dem zweiten Teilnetz (32b) aufweist;
**dadurch gekennzeichnet, dass**
- das Gerät (30) zur Durchführung eines Verfahrens gemäß einem der vorigen Ansprüche 1 - 9 ausgebildet ist.

11. Gerät (30) nach Anspruch 10,
**dadurch gekennzeichnet, dass**
- das Gerät (30) eine mit dem ersten Kommunikationsport (33a) über eine erste Portzugriffssteuereinheit (55a) verbundene erste Authentifizierungseinrichtung (56a) aufweist, die dazu eingerichtet ist, zum Start einer Authentifizierung des Geräts (30) eine erste eine Authentifizierungsinformation enthaltende Authentifizierungsanfrage zu erzeugen;
- das Gerät (30) eine mit dem zweiten Kommunikationsport (33b) über eine zweite Portzugriffssteuereinheit (55b) verbundene zweite Authentifizierungseinrichtung (56b) aufweist, die dazu eingerichtet ist, zum Start einer Authentifizierung des Geräts (30) eine zweite die Authentifizierungsinformation enthaltende Authentifizierungsanfrage zu erzeugen; und
- das Gerät (30) dazu eingerichtet ist, über den ersten Kommunikationsport (33a) die erste Authentifizierungsanfrage auszusenden und über den zweiten Kommunikationsport (33b) die zweite Authentifizierungsanfrage auszusenden.

12. Gerät (30) nach Anspruch 11,
**dadurch gekennzeichnet, dass**
- die erste Portzugriffssteuereinheit (55a) und die zweite Portzugriffssteuereinheit (55b) mit einer Redundanzeinheit (53) des Geräts (30) verbunden und dazu eingerichtet sind, während der Authentifizierung des Geräts (30) einen Datenaustausch des jeweiligen Kommunikationsports (33a, 33b) nur mit der jeweiligen Authentifizierungseinrichtung (56a, 56b) und nach erfolgreicher Authentifizierung des Geräts (30) einen Datenaustausch des jeweiligen Kommunikationsports (33a, 33b) nur mit der Redundanzeinheit (53) des Geräts (30) zu ermöglichen.

13. Gerät (30) nach Anspruch 12,
**dadurch gekennzeichnet, dass**
- die Redundanzeinheit (53) dazu eingerichtet ist, nach erfolgreicher Authentifizierung des Geräts (30) von dem Gerät (30) zu versendende Telegramme zu duplizieren und über beide Kommunikationsports (33a, 33b) zu versenden und von dem Gerät (30) empfangene Telegramme daraufhin zu überprüfen, ob ein identisches Telegramm bereits empfangen worden ist, und das empfangene Telegramm abhängig von der Prüfung an eine Applikationsebene (50) des Geräts (30) weiterzuleiten oder zu verwerfen.

14. Kommunikationsnetz (31, 40) einer Automatisierungsanlage mit
- einem ersten Teilnetz (32a) und einem zweiten Teilnetz (32b),
- einem ersten Zugangspunkt (34a) in dem ersten Teilnetz (32a),
- einem zweiten Zugangspunkt (34b) in dem zweiten Teilnetz (32b),
- zumindest einem Authentifizierungsserver (35a, 35b, 41) und
- zumindest einem zu authentifizierenden Gerät (30),
**dadurch gekennzeichnet, dass**
- das Kommunikationsnetz (31, 40) dazu ausgebildet ist, zur Authentifizierung des zumindest einen Geräts (30) ein Verfahren gemäß einem der Ansprüche 1 bis 9 durchzuführen.

15. Kommunikationsnetz (31, 40) nach Anspruch 14,
**dadurch gekennzeichnet, dass**
- das Gerät (30) entsprechend einem der Ansprüche 10 bis 13 ausgebildet ist und über seinen ersten Kommunikationsport (33a) mit dem ersten Zugangspunkt (34a) und mit seinem zweiten Kommunikationsport (33b) mit dem zweiten Zugangspunkt (34b) in Verbindung steht.
